# EUROPEAN PATENT APPLICATION

(11) **EP 4 261 666 A1**
(43) Date of publication of application: **18.10.2023**
(21) Application number: 21902274.6
(22) Date of filing: 04.11.2021
(51) Int. Cl.: G06F 3/0481

(54) **INTERFACE PROCESSING METHOD AND APPARATUS, AND ELECTRONIC DEVICE AND COMPUTER-READABLE STORAGE MEDIUM**

(30) Priority: 11.12.2020 CN 202011438138
(71) Applicant: GUANGDONG OPPO MOBILE TELECOMMUNICATIONS CORP., LTD., Dongguan, Guangdong 523860 (CN)
(72) Inventor: MO, Boyu, Dongguan, Guangdong 523860 (CN)
(74) Representative: Neusser, Sebastian
(86) International application number: PCT/CN2021/128562
(87) International publication number: WO 2022/121567

(57) **Abstract**

Provided is an interface processing method, including: receiving a first gesture (202); displaying, in response to the first gesture acting on a label aggregate in a current interface, at least one label in the label aggregate, each label in the label aggregate being generated based on an application interface (204); and displaying, in response to detecting an end of the first gesture, a target application interface corresponding to a target label when the first gesture corresponds to the target label, the target label being one of the at least one label (206).

## Description

### CROSS-REFERENCE TO RELATED APPLICATIONS

The present application claims priority to a Chinese Patent Application No. 2020114381381, titled "INTERFACE PROCESSING METHOD AND APPARATUS, ELECTRONIC DEVICE, AND COMPUTER-READABLE STORAGE MEDIUM" and filed with China National Intellectual Property Administration on December 11, 2020, which is incorporated herein by reference in its entirety.

### FIELD

The present disclosure relates to the technical field of terminals, and particularly, to an interface processing method and apparatus, an electronic device, and a computer-readable storage medium.

### BACKGROUND

With the widespread application of various electronic devices, the number of applications on the electronic device end has shown explosive growth, involving various aspects of people's life, work, and entertainment, such as social applications, game applications, media applications, office applications, etc. In daily use, people often activate multiple applications on an electronic device, for example activating a social application for instant communication, activating an office application for working, and also activating a media application to read news. At this time, there is a need to switch between the interfaces of various applications in order to use a corresponding application.

### SUMMARY

According to embodiments of the present disclosure, an interface processing method and apparatus, an electronic device, and a computer-readable storage medium are provided.

An interface processing method includes: receiving a first gesture; displaying, in response to the first gesture acting on a label aggregate in a current interface, at least one label in the label aggregate, each label in the label aggregate being generated based on an application interface; and displaying a target application interface corresponding to a target label when the first gesture corresponds to the target label, in response to detecting an end of the first gesture. The target label is one of the at least one label.

An interface processing apparatus includes: a gesture receiving module configured to receive a first gesture; an aggregate trigger module configured to display, in response to the first gesture acting on a label aggregate in a current interface, at least one label in the label aggregate, each label in the label aggregate being generated based on an application interface; and an application interface display module configured to display, in response to detecting an end of the first gesture, a target application interface corresponding to the target label when the first gesture corresponds to a target label. The target label is one of the at least one label.

An electronic device includes a memory and a processor. The memory has a computer program stored thereon. The processor, when executing the computer program, implements steps of: receiving a first gesture; displaying, in response to the first gesture acting on a label aggregate in a current interface, at least one label in the label aggregate, each label in the label aggregate being generated based on an application interface; and displaying a target application interface corresponding to a target label when the first gesture corresponds to the target label, in response to detecting an end of the first gesture. The target label is one of the at least one label.

A computer-readable storage medium has a computer program stored thereon. The computer program, when executed by a processor, implements steps of: receiving a first gesture; displaying, in response to the first gesture acting on a label aggregate in a current interface, at least one label in the label aggregate, each label in the label aggregate being generated based on an application interface; and displaying a target application interface corresponding to a target label when the first gesture corresponds to the target label, in response to detecting an end of the first gesture. The target label is one of the at least one label.

### BRIEF DESCRIPTION OF THE DRAWINGS

In order to clearly explain technical solutions of the embodiments of the present disclosure or the prior art, drawings used in the description of the embodiments or the prior art are briefly described below. Apparently, the drawings as described below are merely some embodiments of the present disclosure, and other drawings can be obtained by those skilled in the art based on these drawings without creative effort.
FIG. 1 is a schematic diagram of an application environment of an interface processing method according to an embodiment.
FIG. 2 is a flowchart of an interface processing method according to an embodiment.
FIG. 3 is a schematic diagram of a floating window interface of an application according to an embodiment.
FIG. 4 is a schematic diagram of a standard interface of an application according to an embodiment.
FIG. 5 is a schematic interface diagram of a distribution of a label aggregate according to an embodiment.
FIG. 6 is a schematic interface diagram of a swipe-up operation from a label aggregate according to an embodiment.
FIG. 7 is a schematic interface diagram of the swipe-up operation from the label aggregate according to the embodiment shown in FIG. 6.
FIG. 8 is a flowchart of determining a target label according to an embodiment.
FIG. 9 is a schematic interface diagram of swiping from a label aggregate to a hot zone according to an embodiment.
FIG. 10 is a schematic interface diagram of swiping from the label aggregate to the hot zone according to the embodiment shown in FIG. 9.
FIG. 11 is a schematic interface diagram of a dragging operation on a floating window according to an embodiment.
FIG. 12 is a schematic interface diagram of the dragging operation on the floating window according to the embodiment shown in FIG. 11.
FIG. 13 is a schematic interface diagram of accommodating the floating window according to the embodiment shown in FIG. 11.
FIG. 14 is a schematic interface diagram of a swipe-right operation from a label aggregate according to an embodiment.
FIG. 15 is a schematic interface diagram of the swipe-right operation from the label aggregate according to the embodiment shown in FIG. 14.
FIG. 16 is a schematic interface diagram of accommodating a current application interface according to the embodiment shown in FIG. 14.
FIG. 17 is a schematic interface diagram of displaying an application notification message according to an embodiment.
FIG. 18 is a schematic diagram of interface changes of bubble and floating window transition according to an embodiment.
FIG. 19 is a schematic structural block diagram of an interface processing apparatus according to an embodiment.
FIG. 20 is an internal structural diagram of an electronic device according to an embodiment.

### DETAILED DESCRIPTION

In order to clearly explain the objects, technical solutions and advantages of the present disclosure, the present disclosure is described in detail below in conjunction with accompanying drawings and embodiments. It should be understood that the specific embodiments described herein are merely intended to illustrate the present disclosure, instead of limiting the present disclosure.

It will be understood that the terms "first", "second" and the like used herein may be used to describe various elements herein, but such elements are not limited by such terms. These terms are only used to distinguish a first element from another element. For example, without departing from the scope of the present disclosure, a first client may be referred to as a second client, and similarly the second client may be referred to as the first client. Both the first client and the second client are clients, but they are not a same client.

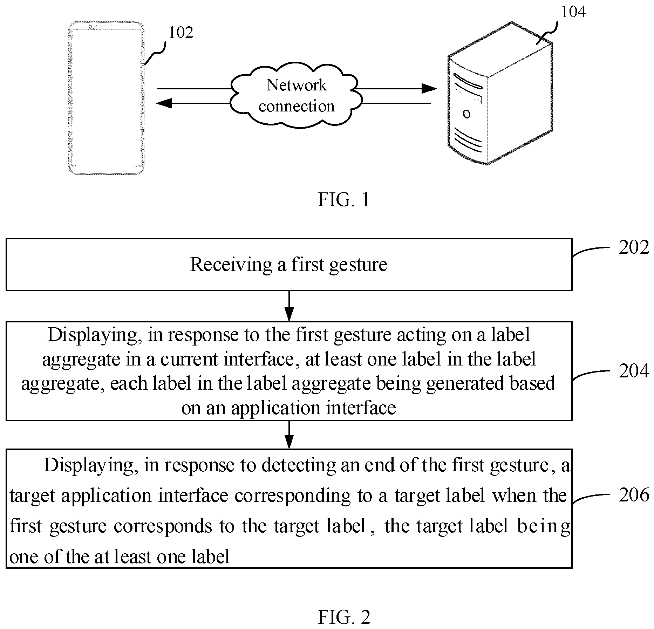

FIG. 1 is a schematic diagram of an application environment of an interface processing method according to an embodiment. As shown in FIG. 1, the application environment includes an electronic device 102 and a server 104. The terminal 102 may be, but is not limited to, various personal computers, notebook computers, smart phones, tablet computers, and portable wearable devices. The server 104 may be implemented as an independent server or a server cluster composed of a plurality of servers. A variety of applications may be installed on the electronic device 102. The functions of each application may be implemented by the server 104. For example, the electronic device 102 may obtain multimedia resources from the server 104 through the network, so as to play and display the multimedia resources on the electronic device 102. For example, the electronic device 102 may receive network messages from the server 104 and transmit the network messages to other clients through the server 104, thus realizing messaging. Different applications of the electronic device 102 correspond to respective application interfaces through which the user operates to realize corresponding functions of the applications, such as video playback, instant communication, and the like.

With the widespread application of various electronic devices, the number of applications on the electronic device side has shown explosive growth, involving various aspects of people's life, work, and entertainment, such as social applications, game applications, media applications, office applications, etc. In daily use, people often activate multiple applications on an electronic device, for example activating a social application for instant communication, activating an office application for working, and also activating a media application to read news. At this time, there is a need to switch between the interfaces of various applications in order to use a corresponding application. However, at present, the control operations on the application interfaces are complex, which leads to a low control efficiency for the application interfaces.

In order to improve a control efficiency of application interfaces, an embodiment of the present disclosure provides an interface processing method. The method includes: receiving a first gesture; displaying, in response to the first gesture acting on a label aggregate in a current interface, at least one label in the label aggregate, each label in the label aggregate being generated based on an application interface; and displaying a target application interface corresponding to a target label when the first gesture corresponds to the target label, in response to detecting an end of the first gesture. The target label is one of the at least one label.

In an embodiment, said displaying, in response to the first gesture acting on the label aggregate in the current interface, the at least one label in the label aggregate may include: determining a starting point position of the first gesture; and displaying the at least one label in the label aggregate in response to the starting point position being located on the label aggregate in the current interface.

In an embodiment, said displaying the target application interface corresponding to the target label when the first gesture corresponds to the target label, in response to detecting the end of the first gesture may include: determining a first gesture parameter of the first gesture in response to the end of the first gesture; determining, based on the first gesture parameter, the target label selected by the first gesture from the at least one label; and displaying the target application interface corresponding to the target label.

In an embodiment, the first gesture parameter includes a movement direction and a movement distance. Said determining, based on the first gesture parameter, the target label selected by the first gesture from the at least one label may include: determining a label from the at least one label corresponding to the movement direction as a pre-selected label; and determining the pre-selected label as the target label selected by the first gesture from the at least one label, in response to the movement distance reaching a predetermined label selection distance threshold. Said displaying the target application interface corresponding to the target label includes: displaying a target application floating window corresponding to the target label.

In an embodiment, the first gesture parameter includes an end point position. Said determining, based on the first gesture parameter, the target label selected by the first gesture from the at least one label may include: determining a label corresponding to an application floating window trigger area as the target label selected by the first gesture from the at least one label, in response to the end point position being in the predetermined application floating window trigger area. Said displaying the target application interface corresponding to the target label includes: displaying a target application floating window corresponding to the target label.

In an embodiment, the method may further include: receiving a second gesture; generating, in response to the second gesture acting on an application interface displayed in the current interface, a label corresponding to the application interface based on the application interface; and accommodating the label corresponding to the application interface in the label aggregate for display.

In an embodiment, said generating, in response to the second gesture acting on the application interface displayed in the current interface, the label corresponding to the application interface based on the application interface may include: determining an interface distribution parameter of the application interface under the action of the second gesture; and generating the label corresponding to the application interface based on the application interface, in response to the interface distribution parameter satisfying an interface conversion condition.

In an embodiment, said generating, in response to the second gesture acting on the application interface displayed in the current interface, the label corresponding to the application interface based on the application interface may include: determining a second gesture parameter of the second gesture; and generating the label corresponding to the application interface based on the application interface, in response to the second gesture parameter satisfying a label generation condition.

In an embodiment, said displaying the at least one label in the label aggregate in response to the first gesture acting on the label aggregate in the current interface may include: displaying the at least one label and a predetermined label vacancy area in the label aggregate in response to the first gesture acting on the label aggregate in the current interface and the label aggregate being unsaturated. The method may further include: generating a to-be-accommodated label based on an application corresponding to the current interface when the first gesture corresponds to the label vacancy area, in response to detecting the end of the first gesture; and accommodating the to-be-accommodated label in the label vacancy area of the label aggregate.

In an embodiment, the method may further include: displaying at least one application floating window corresponding to the at least one label in the label aggregate, in response to the first gesture acting on the label aggregate in the current interface; and displaying a target application floating window in the current interface when the first gesture corresponds to the target application floating window, in response to detecting the end of the first gesture. The target application floating window is one of the at least one application floating window.

In an embodiment, the method may further include: displaying an application notification message of an application corresponding to the label in a notification area associated with the label.

In an embodiment, the label aggregate includes a single label. The method may further include: displaying in the current interface an application floating window corresponding to the single label in the label aggregate, in response to a click trigger operation acting on the label aggregate in the current interface.

In an embodiment, the first gesture parameter includes a movement distance. The method may further include: determining a standard interface of an application corresponding to the target label in response to the movement distance reaching a predetermined standard interface distance threshold. Said displaying the target application interface corresponding to the target label includes: displaying the standard interface.

In an embodiment, the first gesture parameter includes an end point position. The method may further include: determining a standard interface corresponding to an application of the target label in response to the end point position being in a predetermined standard interface trigger area. Said displaying the target application interface corresponding to the target label includes: displaying the standard interface.

In an embodiment, the first gesture parameter includes a gesture pause time length. The method may further include: determining a standard application interface corresponding to the target label in response to the gesture pause time length reaching a predetermined standard interface time length threshold. Said displaying the target application interface corresponding to the target label includes: displaying the standard interface.

In an embodiment, the method may further include: dragging the label aggregate to an aggregate fixing position corresponding to an aggregate dragging operation, in response to the aggregate dragging operation acting on the label aggregate in the current interface.

In an embodiment, the method may further include: obtaining configuration information corresponding to the label aggregate; configuring the label aggregate based on the configuration information; and presenting the label aggregate with a display effect corresponding to the configuration information in the current interface.

FIG. 2 is a flowchart of an interface processing method according to an embodiment. The interface processing method in this embodiment is described by running on the terminal in FIG. 1 as an example. As shown in FIG. 2, the interface processing method includes operations 202 to 208.

At operation 202, a first gesture is received.

The first gesture is a gesture operation triggered by a user in a current interface. The first gesture may specifically include various gesture operations such as a swiping operation, a movement operation, and the like. When the user triggers the processing on the current interface, the current interface receives the collected first gesture.

At operation 204, at least one label in the label aggregate is displayed in response to the first gesture acting on a label aggregate in a current interface, each label in the label aggregate being generated based on an application interface.

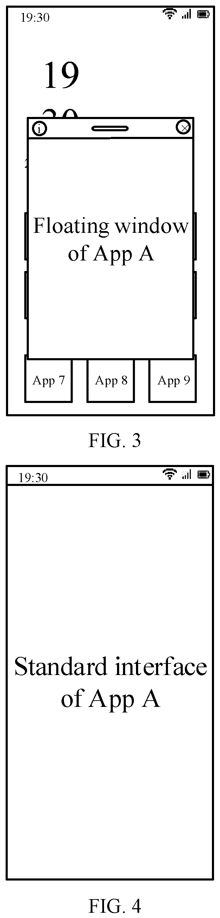

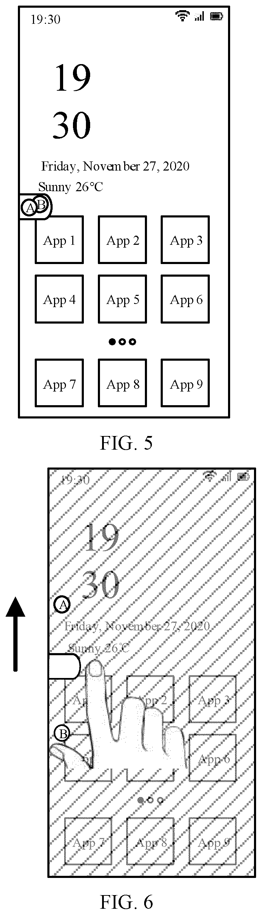

The current interface may be an interface displayed on a current display screen of the electronic device, and may be specifically a system interface, such as a system desktop, or an application interface. As a container of labels, the label aggregate is configured to accommodate various labels, and each label in the label aggregate is generated based on an application interface. The application interface may include a floating window interface and a standard interface of an application. The floating window interface is an interface of an application that is suspended in a form of a floating window above an interface of a next layer, and the user may also operate the application via the floating window interface. The standard interface is a complete interface of the application. Generally, the standard interface is displayed in a full screen mode on the screen of the electronic device, while the floating window interface does not completely cover the interface of the next layer. FIG. 3 is a schematic diagram of a floating window interface of an application A, and FIG. 4 is a schematic diagram of a standard interface of the application A. As shown in FIG. 3 and FIG. 4, the floating window interface of the application A is suspended on a desktop interface, and the floating window interface of the application A does not cover icons of applications 7 to 9 on a next layer, so the user may directly operate on the applications 7 to 9. However, the standard interface of the application A is displayed in a full screen mode, and in this case, it is impossible to operate directly on other applications, it is necessary to exit the standard interface of the application A, e.g., return to the desktop, before operating on other applications. Specifically, the label refers to an application identifier obtained by processing, such as shrinking or mapping, an application interface of the electronic device. The label may be an icon of an application or other signs that can distinguish application interfaces, for example, a picture, a character, a graph, etc. The label aggregate may be arranged in a predetermined area of the current interface of the electronic device. For example, the label aggregate may be docked at an edge of the current interface. As shown in FIG. 5, the label aggregate is docked at a left edge of a desktop, and the label aggregate includes a label A and a label B. The label A and the label B correspond to different application interfaces respectively. In a specific implementation, the label aggregate may be docked at a right edge, an upper edge, or a lower edge of the screen, and the position of the label aggregate may be adjusted by the user through dragging. In addition, the number, shape, style, transparency, and other parameters of the label aggregate may be customized by the user. The label aggregate may accommodate labels of various applications, and each label is generated based on a corresponding application interface. The label may be an icon bubble of a corresponding application interface that is zoomed out, and the user may operate the application interface by operating the bubble. In this embodiment, the label aggregate includes at least one label, and in other embodiments, the number of labels in the label aggregate may vary depending on actual situations. For example, when no label is accommodated in the label aggregate, the number of labels in the label aggregate is 0. When a label is accommodated, at least one label is present in the label aggregate. When two or more labels are accommodated in the label aggregate, at least two labels are present in the label aggregate. In a specific application, the first gesture may be a swiping operation triggered by the user on the screen of the electronic device. The first gesture acting on the label aggregate in the current interface may be touching the screen of the electronic device or clicking on the screen of the electronic device at the position of the label aggregate, and then the swiping operation starts.

Specifically, the label aggregate is included in the current interface of the electronic device screen. At least one label each generated based on an application interface is accommodated in the label aggregate. The user may perform a gesture operation on the label aggregate on the screen of the electronic device. When the first gesture acts on the label aggregate in the current interface, and at the beginning of the first gesture acting on the label aggregate, the electronic device displays at least one label in the label aggregate in response to the first gesture. Each label is generated based on an application interface. For example, the first gesture may be a swiping operation. When the electronic device detects a click operation in the swiping operation of the user on the label aggregate in the current interface, the electronic device displays at least one label in the label aggregate in response to the click operation. Each displayed label is displayed in a corresponding area according to a predetermined position distribution rule. Further, in order to display the label in the label aggregate more intuitively, the current interface can be blurred to highlight the label when the label in the label aggregate is displayed. As shown in FIG. 6, when the user swipes on the label aggregate towards the top of the screen, firstly, the user touches the position of the label aggregate in the screen of the electronic device, and the electronic device displays at least one label in the label aggregate in response to the swiping operation. In this case, a label bubble **A** and a label bubble **B** are displayed above and below the label aggregate, respectively, while the current interface is blurred, and the label aggregate and corresponding labels can be clearly displayed on the screen of the electronic device. In FIG. 6, each label in the label aggregate is presented in a form of a bubble corresponding to an icon of a corresponding application, and in other applications, the label may be presented in other forms, such as a square, an ellipse, etc.

At operation 206, a target application interface corresponding to a target label is displayed when the first gesture corresponds to the target label, in response to detecting an end of the first gesture. The target label is one of the at least one label.

The end of the first gesture refers to an end of the gesture operation of the user, which can be a release of the gesture operation, and specifically may be an end of swiping of the swiping operation. The target label is a label selected from the displayed labels at the end of the first gesture. The target label corresponds to the first gesture, for example, the target label may be a label pointed to by the swiping of the first gesture. The target application interface is an application interface corresponding to the target label, for example, the target application interface may be a floating window interface or a standard interface corresponding to the application corresponding to the target label.

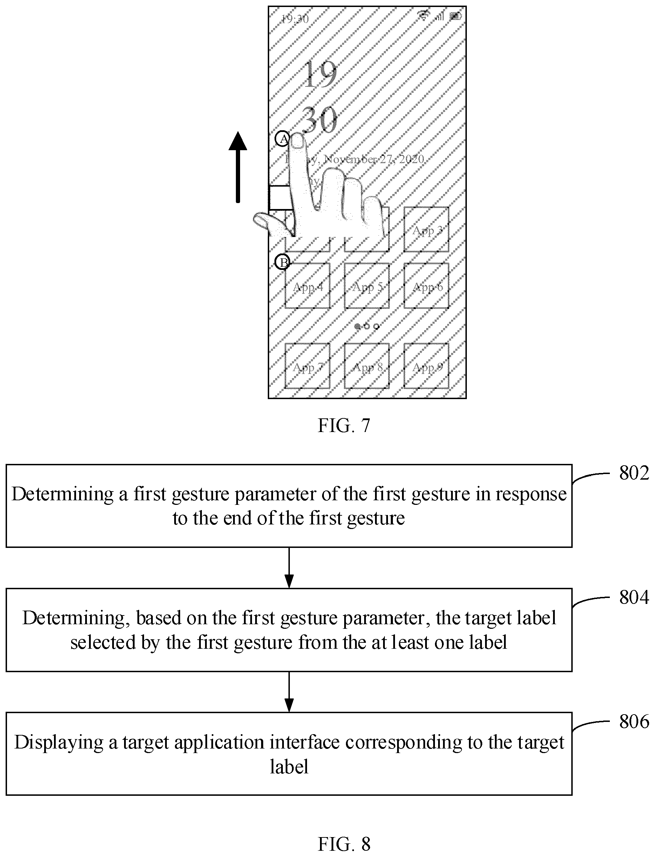

Specifically, after the user initiates the first gesture on the label aggregate of the current interface, the electronic device unfolds the label aggregate and monitors the first gesture. After displaying at least one label in the label aggregate, the electronic device determines the target label corresponding to the first gesture based on the end of the first gesture of the user, and the target label is the label selected by the user for displaying an application interface. For example, the electronic device may determine a label corresponding to an end point position of the first gesture as a target label corresponding to the first gesture. In a specific application, as shown in FIG. 7, the first gesture is a swiping operation, and the user swipes on the label aggregate of the current interface towards the top of the screen, and finally releases the swiping at the displayed bubble **A**. That is, after the user swipes from the label aggregate to the displayed bubble **A** at which the user ends and releases the swiping, the electronic device obtains a swiping selection operation in the swiping operation, and determines, in response to the swiping selection operation, that the swiping selection operation corresponds to the target label. The target label selected by the swiping selection operation is the bubble **A**, indicating that the user wants to display the application interface corresponding to the bubble **A** on the current interface.

Further, the electronic device displays the target application interface corresponding to the target label when the first gesture corresponds to the target label in the at least one label, in response to the end of the first gesture. For example, specifically, as shown in FIG. 3, the floating window interface of the application corresponding to the target label may be displayed on the current interface. Alternatively, as shown in FIG. 4, the electronic device may display the standard interface of the application corresponding to the target label.

In a traditional multi-window operation method of the electronic device, a floating window interface of an application is provided with a zoom-out button. After the user clicks on the zoom-out button, the floating window will be zoomed out into a bubble and stop at the edge of the screen. When the user clicks on a bubble, the corresponding floating window may be opened again, so as to meet certain multi-application collaborative scenarios. When multiple bubbles are present, these bubbles will aggregate to form a bubble aggregate. The aggregate will spread out in response to a click on the aggregate, and then a click on a certain bubble will open a floating window corresponding to the bubble. However, the whole procedure from the floating window to the bubble and then from the bubble to the floating window relies on clicks, and the operation of application interface is complex and has a low efficiency. In this embodiment, the electronic device sequentially unfolds at least one label in the label aggregate, determines the selected target label, and displays the target application interface corresponding to the target label, based on the beginning and end of a same gesture operation, in response to the same gesture operation performed by the user, for example, the same swiping operation. In this way, the application interface can be efficiently processed only by one gesture operation, the operation of the application interface is simplified, and the operation efficiency of the application interface is improved.

In the interface processing method according to the embodiment, at least one label in the label aggregate each generated based on the corresponding application interface is displayed in response to the received first gesture acting on the label aggregate in the current interface, and the target application interface corresponding to the target label is displayed when the first gesture corresponds to the target label in the at least one label, in response to detecting the end of the first gesture. In the process of interface processing, in response to the same first gesture acting on the label aggregate and the end of the first gesture respectively and sequentially, at least one label in the label aggregate is unfolded and then the target application interface corresponding to the target label corresponding to the first gesture is displayed, thereby realizing the application interface processing through the same gesture operation, simplifying the operation of the application interface and improving the operation efficiency of the application interface.

In an embodiment, said displaying, in response to the first gesture acting on the label aggregate in the current interface, the at least one label in the label aggregate includes: determining a starting point position of the first gesture; and displaying the at least one label in the label aggregate in response to the starting point position being located on the label aggregate in the current interface.

The starting point position refers to a position where the first gesture is triggered. For example, the first gesture is a swiping operation, and the starting point position of the first gesture can be the starting position of swiping. Specifically, after receiving the first gesture, the electronic device determines the starting point position of the first gesture, and compares the starting point position with the position of the label aggregate in the current interface. If the starting point position is determined to be on the label aggregate in the current interface based on the comparison result, the electronic device displays at least one label in the label aggregate. In the embodiment, whether the beginning of the first gesture is acting on the label aggregate in the current interface is accurately determined by comparing the position of the first gesture with the position of the label aggregate, so that timely response to the first gesture can be realized and the processing efficiency of the interface can be ensured.

In an embodiment, as shown in FIG. 8, the operation of determining the target label, that is, said displaying the target application interface corresponding to the target label when the first gesture corresponds to the target label, in response to detecting the end of the first gesture, includes operation 802 to operation 806.

At operation 802, a first gesture parameter of the first gesture is determined in response to the end of the first gesture.

The first gesture parameter is information describing the first gesture, and may include, but is not limited to, a starting point position, an end point position, a movement distance, a movement direction, and the like of the first gesture. In a specific application, when the first gesture is a swiping operation, the first gesture parameter may include, but is not limited to, a swiping time length, a swiping start time, a swiping end time, a swiping start position, a swiping end position, a swiping distance, a swiping direction, etc. The first gesture parameter can be obtained via continuous monitoring by the electronic device after receiving the first gesture.

Specifically, the electronic device unfolds the label aggregate in response to the first gesture acting on the label aggregate, and then the electronic device determines the first gesture parameter of the first gesture in response to the end of the first gesture. For example, when the electronic device detects the first gesture, it continuously monitors the parameter of the first gesture to obtain the first gesture parameter.

At operation 804, the target label selected by the first gesture from the at least one label is determined based on the first gesture parameter.

Specifically, after obtaining the first gesture parameter of the first gesture, the electronic device determines the target label selected by the first gesture from the at least one label based on the first gesture parameter. For example, when the first gesture is a swiping operation, the electronic device may determine the target label selected from the displayed labels based on the swiping distance and the swiping direction in the first gesture parameter.

At operation 806, the target application interface corresponding to the target label is displayed.

The target application interface is the application interface corresponding to the target label, for example, a floating window interface or a standard interface of the application corresponding to the target label. Specifically, the electronic device displays the target application interface corresponding to the target label when the first gesture corresponds to the target label in at least one label, in response to the end of the first gesture. For example, specifically, as shown in FIG. 3, the floating window interface of the application corresponding to the target label may be displayed on the current interface. Alternatively, as shown in FIG. 4, the electronic device may display the standard interface of the application corresponding to the target label.

In the embodiment, the target label selected by the first gesture is determined by the first gesture parameter of the first gesture, and the label aggregate may be unfolded and the target label may be selected therefrom based on the same first gesture, thus simplifying the operation flow of the application interface and contributing to the improvement of the operation efficiency of the application interface.

In an embodiment, the first gesture parameter includes a movement direction and a movement distance. Said determining, based on the first gesture parameter, the target label selected by the first gesture from the at least one label includes: determining a label from the at least one label corresponding to the movement direction as a pre-selected label; and determining the pre-selected label as the target label selected by the first gesture from the at least one label, in response to the movement distance reaching a predetermined label selection distance threshold.

The movement direction and the movement distance may be determined based on the starting point position and the end point position in the first gesture parameter. The starting point position refers to the position where the first gesture is triggered. Specifically, when the first gesture is a gesture of a swiping operation, the starting point position can be the position where the user touches and clicks on the screen; the end point position is a position where the first gesture of the user ends. When the first gesture is a gesture of a swiping operation, the end point position can be the position where the user releases the swiping, or the position where the pause time length of the user after swiping reaches a predetermined threshold. The movement direction and movement distance of the first gesture can be calculated based on the coordinates corresponding to the starting point position and the end point position respectively.

Specifically, the electronic device determines the label in the at least one label corresponding to the movement direction as a pre-selected label. Each label is distributed in a different direction. When the user is to select the target label, the user moves in a direction towards the target label. As shown in FIG. 6 and FIG. 7, the user wants to select a label A as the target label, i.e., the label A is the pre-selected label, and the label A is distributed on the top of the label aggregate, the user moves upwards from the label aggregate, i.e., the movement direction is a direction in which the label aggregate points to the label A. After determining the pre-selected label based on the movement direction, the electronic device determines whether the pre-selected label is selected as the target label based on the movement distance. Specifically, the electronic device may compare the movement distance with a predetermined label selection distance threshold. The label selection distance threshold is flexibly predetermined as desired, for example, it may be the distance from the label aggregate to the label. That is, if it is considered that the movement distance reaches the label selection distance threshold when the user moves to the position of the label from the label aggregate, the pre-selected label is determined as the target label selected from at least one label by the moving selection operation.

Further, said displaying the target application interface corresponding to the target label includes: displaying a target application floating window corresponding to the target label.

After the target label is determined, the target application floating window corresponding to the target label is displayed. The target application floating window is a floating window interface of the application corresponding to the target label. In a specific application, the target application floating window corresponding to the target label may be displayed in the center of the current interface or displayed according to a previous display mode. In addition, it can be customized by the user to flexibly display the target application floating window corresponding to the target label as desired.

In this embodiment, the pre-selected label is determined based on the movement direction, and the pre-selected label is judged based on the movement distance. When the movement distance reaches the predetermined label selection distance threshold, the pre-selected label is determined as the target label, thereby realizing the determination of the target label based on the movement direction and the movement distance of the first gesture, simplifying the operation of determining the target label and contributing to the improvement of the processing efficiency of the application interface.

In an embodiment, the first gesture parameter includes an end point position. Said determining, based on the first gesture parameter, the target label selected by the first gesture from the at least one label includes: determining a label corresponding to an application floating window trigger area as the target label selected by the first gesture from the at least one label, in response to the end point position being in the predetermined application floating window trigger area.

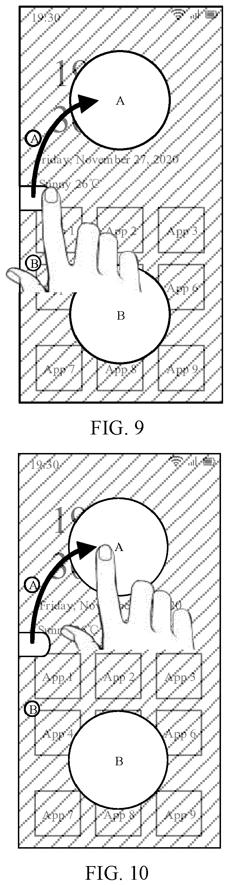

The end point position is a position where the first gesture of the user ends. Specifically, when the first gesture is a gesture of a swiping operation, the end point position can be the position where the user releases the swiping, or the position where the pause time length of the user after swiping reaches a predetermined threshold. In particular, the electronic device compares the end point position and the predetermined application floating window trigger area to obtain a positional relationship therebetween. The application floating window trigger area is a trigger hot zone of the application floating window. If the end point position is in the application floating window trigger area, the operation of the first gesture is considered to be effective, and the label corresponding to the application floating window trigger area is determined as the target label selected by the first gesture from the at least one label. In a specific implementation, each label can be set with a corresponding application floating window trigger area, and when the end point position is in the application floating window trigger area, the label corresponding to the application floating window trigger area is determined as the target label. As shown in FIG. 9 and FIG. 10, when the labels in the label aggregate are displayed, the application floating window trigger areas corresponding to the labels are displayed at the same time, and the application floating window trigger areas corresponding to the labels can be distinguished by different identifiers, such as area colors, area shapes, area text descriptions, etc. A label A is determined as the target label in response to a first gesture of the user, e.g., a swiping operation, swiping to the application floating window trigger area corresponding to the label A from the label aggregate.

Further, said displaying the target application interface corresponding to the target label includes: displaying a target application floating window corresponding to the target label.

After the target label is determined, the target application floating window corresponding to the target label is displayed. The target application floating window is the floating window interface of the application corresponding to the target label. In the specific application, the target application floating window corresponding to the target label can be displayed in the center of the current interface or according to a previous display mode. In addition, it can be customized by the user to flexibly display the target application floating window corresponding to the target label as desired.

In the embodiment, the corresponding target label is determined based on the position relationship between the end point position and the predetermined application floating window trigger area, thereby realizing the determination of the target label based on the end point position of the first gesture, simplifying the operation of determining the target label, and contributing to the improvement of the processing efficiency of the application interface.

In an embodiment, the interface processing method further includes: receiving a second gesture; generating, in response to the second gesture acting on an application interface displayed in the current interface, a label corresponding to the application interface based on the application interface; and accommodating the label corresponding to the application interface in the label aggregate for display.

The second gesture is used for converting the application interface displayed in the current interface into the label corresponding to the application interface, and accommodating the label in the label aggregate for display, thereby converting the displayed application interface for display. Specifically, when the electronic device receives a second gesture, for example, a second gesture acting on an application interface displayed in the current interface, for example, an operation gesture that the user drags the application interface to the edge of the screen, or the user directly clicks on a conversion control corresponding to the application interface, the electronic device generates the label corresponding to the application interface according to the application interface. In a specific implementation, the electronic device may directly zoom out the application interface to obtain the label corresponding to the application interface, and alternatively, the electronic device may generate the label based on application information corresponding to the application interface, such as an application name, an application number, etc. After obtaining the label corresponding to the application interface, the electronic device accommodates the label corresponding to the application interface into the label aggregate for display, thereby realizing the accommodation of the application interface into the label aggregate of the current interface in a form of a label, and facilitating the user's operation on other applications or interfaces.

In this embodiment, when the electronic device receives the second gesture acting on the application interface, the generated label corresponding to the application interface is accommodated in the label aggregate for display, thereby realizing a rapid accommodating processing of the application interface. The user can quickly open the corresponding label through the first gesture of the label aggregate, thereby simplifying the operation of the application interface and contributing to the improvement the processing efficiency of the application interface.

In an embodiment, said generating, in response to the second gesture acting on the application interface displayed in the current interface, the label corresponding to the application interface based on the application interface includes: determining an interface distribution parameter of the application interface under the action of the second gesture; and generating the label corresponding to the application interface based on the application interface, in response to the interface distribution parameter satisfying an interface conversion condition.

Specifically, the second gesture may include an interface drag operation on the application interface, and the electronic device determines the interface distribution parameter of the application interface under the action of the interface drag operation in response to the interface drag operation acting on the application interface displayed in the current interface. The interface distribution parameters include a distribution position of the application interface on the screen of the electronic device. When the interface distribution parameter satisfies the interface conversion condition, for example, when more than half of the application interface is dragged outside the display screen, it is considered that the interface conversion condition is satisfied, and the electronic device generates the corresponding label based on the application interface. In a specific application, a forehead area of the application interface may be set as a response area of the interface drag operation, that is, the user may trigger the interface drag operation in the forehead area of the application interface to drag the application interface and change the distribution position of the application interface. The interface distribution parameter may further include a display ratio of the application interface in the screen of the electronic device, and the interface conversion condition may include a display ratio threshold. When the display ratio reaches the display ratio threshold, a corresponding label is generated based on the application interface, thereby accommodating the application interface in the label aggregate for a thumbnail display.

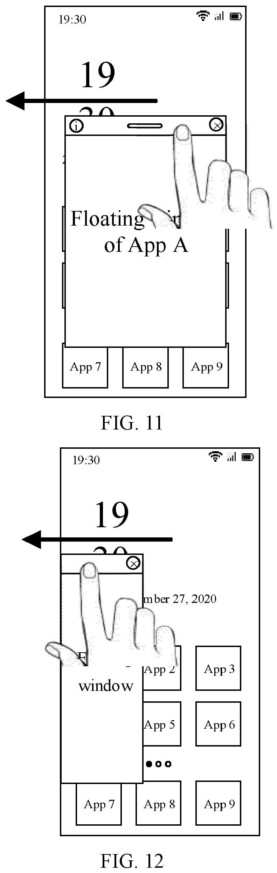

In a specific application, as shown in FIG. 11, FIG. 12, and FIG. 13, the user may drag a forehead part of the application interface based on the second gesture, and drag the application interface to the edge of the screen. The application interface beyond the screen range of the electronic device will not be displayed. When a display ratio of the application interface in the screen of the electronic device is smaller than 50%, the electronic device generates the corresponding label based on the application interface, and accommodates the label corresponding to the application interface into the label aggregate for display.

In the embodiment, the label corresponding to the application interface is generated based on the interface distribution parameter of the application interface under the action of the second gesture, so that the application interface can be quickly accommodated through the second gesture for the application interface, and the processing efficiency of the application interface can be improved.

In an embodiment, said generating, in response to the second gesture acting on the application interface displayed in the current interface, the label corresponding to the application interface based on the application interface includes: determining a second gesture parameter of the second gesture; and generating the label corresponding to the application interface based on the application interface, in response to the second gesture parameter satisfying a label generation condition.

The second gesture parameter refers to operation information of the second gesture, which can include a starting point position, an end point position, a movement distance, and a movement direction, and the like of the second gesture. Specifically, when the second gesture is an interface drag operation, the second gesture parameters may include, but are not limited to, a drag time length, a drag displacement, a drag starting point position, a drag end point position, and the like. Specifically, the electronic device determines the second gesture parameter of the second gesture in response to receiving the second gesture acting on the application interface displayed in the current interface, and generates the label corresponding to the application interface based on the application interface, in response to the second gesture parameter satisfying the label generation condition. The label generation condition can be predetermined as desired, for example, the end point position of the second gesture reaching the edge of the screen of the electronic device, the movement distance of the second gesture exceeding a predetermined displacement distance, etc. After the user operates on the application interface through the second gesture, the electronic device determines the end point position of the second gesture. When the end point position is at the edge of the screen of the electronic device, it is considered that the label generation condition is satisfied, and the label corresponding to the application interface is generated based on the application interface, thereby accommodating the application interface into the label aggregate for display.

In this embodiment, the second gesture parameter of the second gesture acting on the application interface displayed in the current interface is determined, the label corresponding to the application interface is generated when the second gesture parameter of the second gesture satisfies the label generation condition, thereby realizing a rapid accommodation of a corresponding application interface through the second gesture for the application interface, and improving the processing efficiency of the application interface.

In an embodiment, said displaying the at least one label in the label aggregate in response to the first gesture acting on the label aggregate in the current interface includes: displaying the at least one label and a predetermined label vacancy area in the label aggregate in response to the first gesture acting on the label aggregate in the current interface and the label aggregate being unsaturated.

The label aggregate being unsaturated refers to that there is a label vacancy in the label aggregate. That is, the label aggregate may accommodate further labels. When the label aggregate may accommodate further labels, the current application interface may be accommodated into the label aggregate through the first gesture. Specifically, when the first gesture acts on the label aggregate in the current interface and the label aggregate is unsaturated, indicating that the label aggregate may accommodate further labels, the electronic device displays the at least one label and the predetermined label vacancy area in the label aggregate in response to the beginning of the first gesture. The label vacancy area is an empty area where no label is accommodated.

Further, the interface processing method further includes: generating a to-be-accommodated label based on an application corresponding to the current interface when the first gesture corresponds to the label vacancy area, in response to detecting the end of the first gesture; and accommodating the to-be-accommodated label in the label vacancy area of the label aggregate.

The electronic device continuously monitors the first gesture. In response to detecting that the first gesture corresponds to the label vacancy area, specifically, detecting that the end of the first gesture acts on the label vacancy area, the electronic device generates the to-be-accommodated label based on the application corresponding to the current interface. In a specific implementation, the electronic device can determine the end point position of the first gesture, and determine whether the end of the first gesture acts on the label vacancy area based on the end point position of the first gesture. If so, the electronic device generates the to-be-accommodated label based on the application corresponding to the current interface, and accommodates the to-be-accommodated label in the label vacancy area of the label aggregate. In a specific implementation, when the first gesture operation is a gesture of a swiping operation, the electronic device may determine whether the swiping end point position of the swiping operation is in an area associated with the label vacancy area. If so, it is considered that the end of the first gesture acts on the label vacancy area, and the electronic device generates the to-be-accommodated label based on the application corresponding to the current interface, and accommodates the to-be-accommodated label in the label vacancy area of the label aggregate.

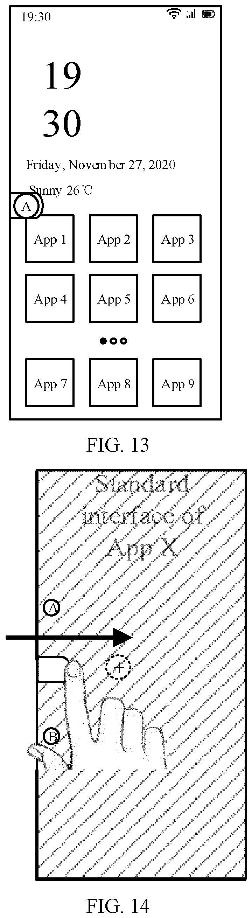

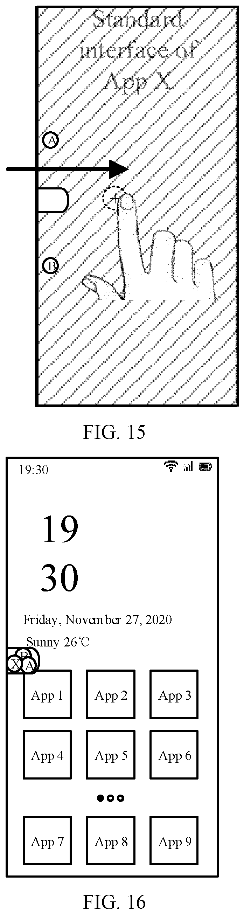

In a specific application, as shown in FIG. 14, FIG. 15, and FIG. 16, when a user performs a swiping operation on a label aggregate in a standard interface of an application X, When the electronic device displays a label **A**, a label **B**, a predetermined label vacancy area in the label aggregate in response to determining that the start of the swiping operation acts on the label aggregate. When the swiping operation of the user continues to swipe right to the label vacancy area, the electronic device generates a to-be-accommodated label based on the application **X** in response to determining that the end of the first gesture acts on the label vacancy area, so as to obtain the label X, and accommodates the label X in the label vacancy area of the label aggregate. At this time, the interface returns to the desktop.

In this embodiment, through an object on which the first gesture acts and the corresponding object at the end of the first gesture, the to-be-accommodated label is generated based on the application corresponding to the current interface, and the to-be-accommodated label is accommodated in the label vacancy area of the label aggregate. In this way, the current application interface is quickly accommodated through a same gesture operation, the operation on the application interface is simplified, and the operation efficiency for the application interface is improved.

In an embodiment, the interface processing method further includes: displaying at least one application floating window corresponding to the at least one label in the label aggregate, in response to the first gesture acting on the label aggregate in the current interface; and displaying, in response to detecting the end of the first gesture, a target application floating window in the current interface when the first gesture corresponds to the target application floating window. The target application floating window is one of the at least one application floating window.

The first gesture may be an operation triggered by the user on the screen of the electronic device, and the first gesture may be used for triggering the display of the label aggregate. Specifically, the user touching the screen of the electronic device or clicking on the screen of the electronic device is considered as the start of the first gesture. When the first gesture acts on the label aggregate, the label aggregate is unfolded. Specifically, when the first gesture received by the electronic device acts on the label aggregate in the current interface, the at least one application floating window corresponding to the at least one label in the label aggregate is displayed in the current interface. By directly displaying the at least one application floating window corresponding to the at least one label in the label aggregate, it is convenient for the user to directly select the content to be displayed based on the application floating window. Compared with the label, the application floating window can carry more information, which is conducive for the user to make accurate choices.

Further, whether the first gesture corresponds to the target application floating window in the at least one application floating window is determined in response to detecting the end of the first gesture. For example, the target application floating window selected by the first gesture can be determined based on the first gesture. The target application floating window is a to-be-displayed application floating window selected by the first gesture from the at least one application floating window corresponding to the displayed at least one label. Specifically, the electronic device monitors the first gesture, determines, in response to the end of the first gesture, the target application floating window selected from the at least one application floating window based on the first gesture, and displays the target application floating window in the current interface.

In this embodiment, the at least one application floating window corresponding to the at least one label in the label aggregate is displayed in response to the first gesture acting on the label aggregate, and the target application floating window corresponding to the first gesture is displayed in response to the end of the first gesture. In this way, the application floating window carrying more information is directly displayed, which is convenient for the user to select the to-be-displayed object and is beneficial to improving the operation efficiency for the application interface.

In an embodiment, the interface processing method further includes: displaying an application notification message of an application corresponding to the label in a notification area associated with the label.

The notification area is used for displaying the application notification message of the application corresponding to the label, such as an application unread message, application status information, etc. The notification area may be set flexibly as desired by the user, and may also be set as required by the application. Specifically, each label may be set to be associated with one or more notification areas. For example, the number of messages may be displayed directly on the label, and a message text may be displayed in an adjacent area of the label, so as to prompt for an application status, which is convenient for the user to obtain application status information in time.

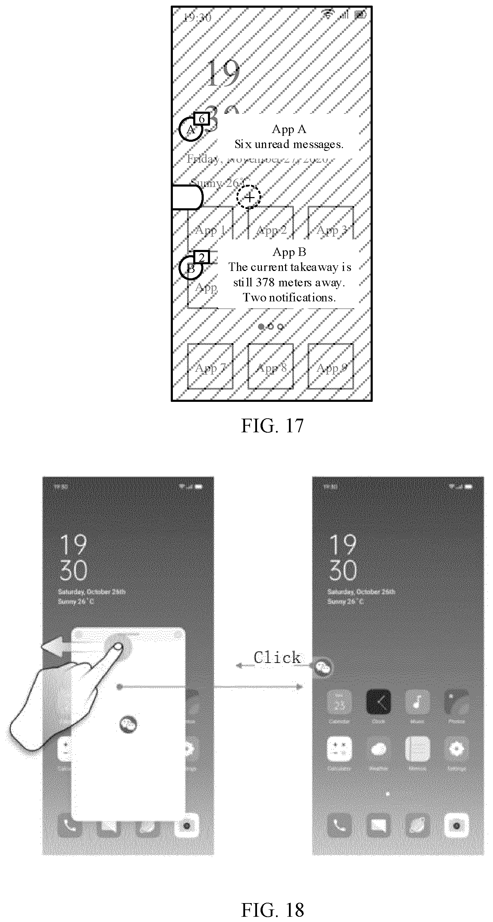

As shown in FIG. 17, in an application, the corresponding number of messages is displayed in an upper right corner of each of a label **A** and a label **B**, and application information is displayed in text on a right side of each of the label **A** and the label **B**.

In this embodiment, the application notification message of the application corresponding to the label is displayed in the notification area associated with the label, so that the status information of each application is visually displayed to prompt in time, which is beneficial to ensuring the timeliness of the message.

In an embodiment, the label aggregate includes a single label. The interface processing method further includes: displaying in the current interface an application floating window corresponding to the single label in the label aggregate, in response to a click trigger operation acting on the label aggregate in the current interface.

The label aggregate including a single label indicates that a single label is present in the label aggregate. In this case, the electronic device displays in the current interface the application floating window corresponding to the single label in the label aggregate in response to the click trigger operation acting on the label aggregate in the current interface. The click trigger operation may be an operation of the user clicking on the label aggregate. When the user clicks on the label aggregate, the single label in the label aggregate may be directly processed. The electronic device displays in the current interface the application floating window corresponding to the single label in the label aggregate. In this way, the label in the label aggregate can be quickly operated by one click, and the operation efficiency for the application interface is further improved. In a specific application, when the label aggregate includes a single label, an efficient operation on the application corresponding to the single label can also be realized by the first gesture.

In an embodiment, the first gesture parameter includes a movement distance. The interface processing method further includes: determining a standard interface of an application corresponding to the target label in response to the movement distance reaching a predetermined standard interface distance threshold.

The movement distance may be determined based on the starting point position and the end point position of the first gesture. Specifically, the movement distance of the first gesture may be calculated based on coordinates corresponding to the starting point position and coordinates corresponding to the end point position. Specifically, when the movement distance of the first gesture of the user reaches the predetermined standard interface distance threshold, the electronic device determines the standard interface of the application corresponding to the target label. For example, the corresponding application may be determined based on identifier information of the target label, thereby determining the corresponding standard interface. The standard interface distance threshold is predetermined as desired. The standard interface is a non-floating window interface, and is generally a full-screen interface of the application. That is, the standard interface will cover a whole screen range of the electronic device.

Further, said displaying the target application interface corresponding to the target label includes: displaying the standard interface.

After determining the standard interface of the application corresponding to the target label, the electronic device displays the standard interface. In a specific application, the determination of the display of the standard interface and the determination of the display of the application floating window may exist at the same time, and the standard interface distance threshold is greater than the label selection distance threshold. That is, the moving distance of the first gesture is compared with each of the standard interface distance threshold and the label selection distance threshold, so as to determine to display in the current interface the standard interface or application floating window of the application corresponding to the target label.

In this embodiment, the type of the display interface is determined based on the movement distance. When the movement distance reaches the predetermined standard interface distance threshold, the standard interface corresponding to the application of the target label is determined and displayed, thereby realizing the display of the standard interface based on the movement distance of the first gesture, simplifying the operation of controlling the standard interface for display, and contributing to the improvement of the processing efficiency of the application interface.

In an embodiment, the first gesture parameter includes an end point position. The interface processing method further includes: determining a standard interface of an application corresponding to the target label in response to the end point position being in a predetermined standard interface trigger area.

The end point position is a position where the first gesture of the user ends or terminates. Specifically, when the first gesture is a swiping operation, the end point position may be the position where the user releases the swiping, or the position where the pause time length of the user after swiping reaches a predetermined threshold. Specifically, the electronic device obtains a positional relationship between the end point position and the predetermined standard interface trigger area through comparison. The standard interface trigger area is a trigger hot zone of the standard interface. When the end point position is in the standard interface trigger area, it is considered that the first gesture needs to display the standard interface of the application corresponding to the target label. In a specific implementation, each label may be set with one standard interface trigger area, and the standard interface of the application corresponding to the target label is determined in response to the end point position being in the standard interface trigger area.

Further, said displaying the target application interface corresponding to the target label includes: displaying the standard interface.

After determining the standard interface of the application corresponding to the target label, the electronic device displays the standard interface. In a specific application, the determination of the display of the standard interface and the determination of the display of the application floating window may exist at the same time. The standard interface trigger area and the application floating window trigger area are different areas. That is, the end point position of the first gesture, a position belonging relationship between the end point position of the first gesture and the standard interface trigger area and a position belonging relationship between the end point position of the first gesture and the application floating window trigger area are respectively determined, so as to determine to display in the current interface the standard interface or application floating window of the application corresponding to the target label.

In this embodiment, the type of a display interface is determined based on the end point position. When the end point position is in the predetermined standard interface trigger area, the standard interface of the application corresponding to the target label is determined and displayed, thereby realizing the display of the standard interface based on the end point position of the first gesture, simplifying the operation of controlling the standard interface for display and contributing to the improvement of the processing efficiency of the application interface.

In an embodiment, the first gesture parameter includes a gesture pause time length. The interface processing method further includes: determining a standard application interface corresponding to the target label in response to the gesture pause time length reaching a predetermined standard interface time length threshold.

The gesture pause time length is a duration of pause of the first gesture of the user until the end of the first gesture, which can be obtained based on a time span between the time when the first gesture reaches the end point position and the time when the user releases and ends the first gesture. The standard interface time length threshold is used to determine whether the gesture pause time length meets a time length condition of displaying the standard interface. The value of the standard interface time length threshold may be set as desired, and may also be personalized based on the user's using habits. The gesture pause time length is compared with the predetermined standard interface time length threshold. When the gesture pause time length reaches the predetermined standard interface time length threshold, it indicates that the user wants to display the standard interface of the application corresponding to the target label. Then, the electronic device determines the standard application interface corresponding to the target label, for example, determines the corresponding application based on the identifier information of the target label, so as to determine the corresponding standard interface.

Further, said displaying the target application interface corresponding to the target label includes: displaying the standard interface.

After determining the standard interface of the application corresponding to the target label, the electronic device displays the standard interface. In a specific application, the determination of the display of the standard interface and the determination of the display of the application floating window may exist at the same time. That is, the standard interface time length threshold and an application floating window time length threshold may be set, and the standard interface time length threshold is greater than the application floating window time length threshold. That is, the gesture pause time length of the first gesture is compared with the standard interface time length threshold and the application floating window time length threshold, respectively, so as to determine to display in the current interface the standard interface or application floating window of the application corresponding to the target label.

In this embodiment, the type of a display interface is determined based on the gesture pause time length. When the gesture pause time length reaches the predetermined standard interface time length threshold, the standard interface of the application corresponding to the target label is determined and displayed, thereby realizing the display of the standard interface based on the gesture pause time length of the first gesture, simplifying the operation of controlling the standard interface for display, and contributing to the improvement of the processing efficiency of the application interface.

In an embodiment, the interface processing method further includes: dragging the label aggregate to an aggregate fixing position corresponding to an aggregate dragging operation, in response to the aggregate dragging operation acting on the label aggregate in the current interface.

The aggregate dragging operation refers to a triggered operation for dragging the whole label aggregate. Specifically, a dragging control for the label aggregate is activated after the user applies a long press on the label aggregate for a predetermined time threshold, and then the user drags the label aggregate. The electronic device responds to the aggregate dragging operation acting on the label aggregate in the current interface and drags the label aggregate to the aggregate fixing position corresponding to the aggregate dragging operation. For example, after the user ends dragging, a position where the user's dragging operation ends can be determined as the aggregate fixing position, thereby dragging the label aggregate to this position and update the position of the label aggregate. In this way, a more flexible label aggregate setting requirements for the user is met.

In an embodiment, the interface processing method further includes: obtaining configuration information corresponding to the label aggregate; configuring the label aggregate based on the configuration information; and presenting the label aggregate with a display effect corresponding to the configuration information in the current interface.

The configuration information may specifically include, but is not limited to, configuration data defining size, shape, transparency, color, label saturation amount, position, quantity, or style of the label aggregate. The configuration information may be set by default in advance, or a personalized configuration may be set by the user. The electronic device obtains the configuration information corresponding to the label aggregate, configures the label aggregate and based on the configuration information. After the label aggregate is completely configured, the electronic device presents the label aggregate with the display effect corresponding to the configuration information in the current interface, thereby displaying the label aggregate in accordance with the effect defined by the configuration information and enriching the personalized pursuit of the user.

Further, in addition to configuring the label aggregate, the label in the label aggregate may also be configured. Specifically, the electronic device may obtain label configuration information for the label. The label configuration information may include, but is not limited to, configuration data defining size, shape, transparency, color, position, quantity, or style of the label. The electronic device configures the label based on the label configuration information, and presents a display effect corresponding to the label configuration information in the interface when the label needs to be displayed, thereby displaying the label in accordance with the effect defined by the label configuration information and further enriching the personalized pursuit of the user.

In an embodiment, an application scenario is provided. The interface processing method described above is applied in the application scenario. Specifically, the application scenario involves a quick operation on an application floating window on an electronic device. When the electronic device opens a game application **W** and the user is using the game application, a social application may be displayed in a form of floating window, such as a WeChat floating window. At this time, once the user drags the WeChat floating window to the edge of the screen, the WeChat floating window may be accommodated as a bubble near the edge, the bubble is accommodated in a bubble aggregate, and an accommodating timing is determined based on a proportion of the floating window outside the screen. Further, when only one bubble is present in the bubble aggregate, the user may open the corresponding floating window by a swiping operation or by clicking on the bubble aggregate. As shown in FIG. 18, for a WeChat floating window, the user may drag a forehead part of the WeChat floating window to the edge of the screen. When a bubble accommodation condition is met, the WeChat floating window is accommodated in the form of bubble in the bubble aggregate on the edge of the screen. The bubble is identified by a WeChat icon. That is, a left interface diagram is converted into a right interface diagram. At this time, a single bubble is present in the bubble aggregate, that is, the bubble corresponding to the WeChat floating window. The user may open the WeChat floating window by directly clicking on the bubble aggregate. That is, the interface of the electronic device changes from the right interface diagram to the left interface diagram, thus re-displaying the WeChat floating window.

Further, when the user continues to open other applications, for example opening a Meituan floating window, the Meituan floating window may be accommodated to the edge by a swiping operation. At this time, two bubbles will gather in the bubble aggregate. The user only needs to click on the gathered bubbles, the spreading of the bubbles may be triggered, and the spread bubbles may be accompanied by certain notification information, e.g., the number of application messages and text descriptions, etc. Then a corresponding floating window application can be quickly opened after the user swipes to a corresponding direction, reaches a certain triggering distance or reaches a hot zone of the corresponding bubble, and then releases. In addition, when the bubbles are spread, the application floating window corresponding to the bubbles can be directly displayed, so that the user can directly select an application floating window to resume the display. The time length of a whole restart process of the floating window application can be shortened according to the user's hand speed. For example, the user can quickly open the required application floating window from the bubble aggregate by directly swiping up from the gathered bubbles and releasing.

In the embodiment, the bubble aggregate may include three bubbles at the same time, which are distributed in upper, middle, and lower directions of the bubble aggregate, respectively. The user can quickly open a corresponding application floating window through a swiping operation from the bubble aggregate in the upper, middle or lower direction. In addition, when the bubble aggregate is unsaturated, for example, two bubbles are present, a vacancy is displayed in the middle after the bubbles are spread by a click on the bubble aggregate. When swiping to the vacancy and releasing, an application at the bottom, for example the game application **W**, can be directly accommodated into the bubble, thus improving the operation efficiency of the application interface and providing great convenience for the multi-application collaborative scenario.

It should be understood that although the operations in the flowcharts of FIG. 2 and FIG. 8 are shown in sequence as indicated by the arrows, these operations are not necessarily performed in sequence as indicated by the arrows. Unless explicitly stated in the present disclosure, there is no strict order limit to the execution of these operations, and these operations can be performed in other orders. Further, at least a portion of the operations in FIG. 2 and FIG. 8 may include a plurality of sub-operations or a plurality of stages, these sub-operations or stages are not necessarily completed at the same time, but can be executed at different times, and the execution order of these sub-operations or stages is not necessarily sequential, but can be executed in turn or alternately with other operations or at least a part of sub-operations or stages of other operations.

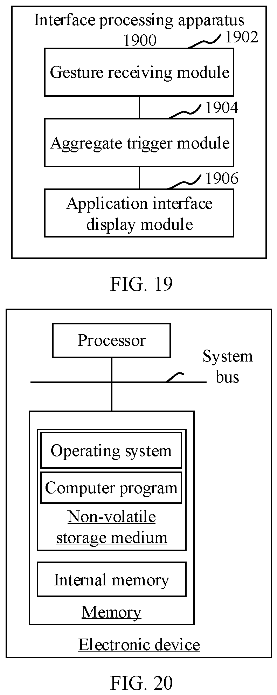

FIG. 19 is a structural block diagram of an interface processing apparatus 1900 according to an embodiment. As shown in FIG. 19, the apparatus may adopt a software module, a hardware module, or a combination of the two as a part of a computer device. The apparatus specifically includes a gesture receiving module 1902, an aggregate trigger module 1904, and an application interface display module 1906.

The gesture receiving module 1902 is configured to receive a first gesture.

The aggregate trigger module 1904 is configured to display, in response to the first gesture acting on a label aggregate in a current interface, at least one label in the label aggregate, each label in the label aggregate being generated based on an application interface.

The application interface display module 1906 is configured to display, in response to detecting an end of the first gesture, a target application interface corresponding to a target label when the first gesture corresponds to the target label. The target label is one of the at least one label.

In an embodiment the aggregate trigger module 1904 includes a starting point position determining module and an aggregate spreading module. The starting point position determining module is configured to determine a starting point position of the first gesture. The aggregate spreading module is configured to display the at least one label in the label aggregate in response to the starting point position being located on the label aggregate in the current interface.

In an embodiment the application interface display module 1906 includes a first gesture parameter obtaining module, a target label determining module, and a display module. The first gesture parameter obtaining module is configured to determine a first gesture parameter of the first gesture in response to the end of the first gesture. The target label determining module is configured to determine, based on the first gesture parameter, the target label selected by the first gesture from the at least one label. The display module is configured to display the target application interface corresponding to the target label.

In an embodiment, the first gesture parameter includes a movement direction and a movement distance. The target label determining module is further configured to determine a label from the at least one label corresponding to the movement direction as a pre-selected label; determine the pre-selected label as the target label selected by a swiping selection operation from the at least one label, in response to the movement distance reaching a predetermined label selection distance threshold. The display module is further configured to display a target application floating window corresponding to the target label.

In an embodiment, the first gesture parameter includes an end point position. The target label determining module is further configured to determine a label corresponding to a predetermined application floating window trigger area as the target label selected by the first gesture from the at least one label, in response to the end point position being in the predetermined application floating window trigger area.

In an embodiment, the apparatus further includes a second gesture receiving module, a label generation module, and a label accommodating module. The second gesture receiving module is configured to receive a second gesture. The label generation module is configured to generate, in response to the second gesture acting on an application interface displayed in the current interface, a label corresponding to the application interface based on the application interface. The label accommodating module is configured to accommodate the label corresponding to the application interface in the label aggregate for display.

In an embodiment, the label generation module includes an interface distribution parameter module and a parameter analysis module. The interface distribution parameter module is configured to determine an interface distribution parameter of the application interface under the action of the second gesture. The parameter analysis module is configured to generate the label corresponding to the application interface based on the application interface, in response to the interface distribution parameter satisfying an interface conversion condition.

In an embodiment, the label generation module further includes a second gesture parameter determining module and a second gesture parameter analysis module. The second gesture parameter determining module is configured to determine a second gesture parameter of the second gesture. The second gesture parameter analysis module is configured to generate the label corresponding to the application interface based on the application interface, in response to the second gesture parameter satisfying a label generation condition.

In an embodiment, the aggregate trigger module 1904 is further configured to display the at least one label and a predetermined label vacancy area in the label aggregate in response to the first gesture acting on the label aggregate in the current interface and the label aggregate being unsaturated. The apparatus further includes a to-be-accommodated label obtaining module and a vacancy processing module. The to-be-accommodated label obtaining module is configured to generate a to-be-accommodated label based on an application corresponding to the current interface when the first gesture corresponds to the label vacancy area, in response to detecting the end of the first gesture. The vacancy processing module is configured to accommodate the to-be-accommodated label in the label vacancy area of the label aggregate.

In an embodiment, the aggregate trigger module 1904 is further configured to display at least one application floating window corresponding to the at least one label in the label aggregate, in response to the first gesture acting on the label aggregate in the current interface. The apparatus further includes a target floating window display module. The target floating window display module is configured to display a target application floating window in the current interface when the first gesture corresponds to the target application floating window, in response to detecting the end of the first gesture. The target application floating window is one of the at least one application floating window.

In an embodiment, the apparatus further includes a notification message display module. The notification message display module is configured to display an application notification message of an application corresponding to the label in a notification area associated with the label.

In an embodiment, the label aggregate includes a single label. The apparatus further includes a click trigger module. The click trigger module is configured to display in the current interface an application floating window corresponding to the single label in the label aggregate, in response to a click trigger operation acting on the label aggregate in the current interface.

In an embodiment, the first gesture parameter includes a movement distance. The apparatus further includes a standard interface distance determining module. The standard interface distance determining module is configured to determine a standard interface of an application corresponding to the target label in response to the movement distance reaching a predetermined standard interface distance threshold. The application interface display module 1906 is further configured to display the standard interface.

In an embodiment, the first gesture parameter includes an end point position. The apparatus further includes a standard interface area determining module. The standard interface area determining module is configured to determine a standard interface of an application corresponding to the target label in response to the end point position being in a predetermined standard interface trigger area.

In an embodiment, the first gesture parameter includes a gesture pause time length. The apparatus further includes a standard interface time length determining module. The standard interface time length determining module is configured to determine a standard application interface corresponding to the target label in response to the gesture pause time length reaching a predetermined standard interface time length threshold.

In an embodiment, the apparatus further includes an aggregate dragging module. The aggregate dragging module is configured to drag the label aggregate to an aggregate fixing position corresponding to an aggregate dragging operation, in response to the aggregate dragging operation acting on the label aggregate in the current interface.

In an embodiment, the apparatus further includes a configuration information obtaining module, a configuration processing module, and a configuration effect display module. The configuration information obtaining module is configured to obtain configuration information corresponding to the label aggregate. The configuration processing module is configured to configure the label aggregate based on the configuration information. The configuration effect display module is configured to present the label aggregate with a display effect corresponding to the configuration information in the current interface.

The division of the modules in the interface processing apparatus is for illustration only. In other embodiments, the interface processing apparatus may be divided into different modules as required to complete all or part of the functions of the interface processing apparatus.

Reference can be made to the above-mentioned definition of the interface processing method for the specific definition of the interface processing apparatus, which will not be repeated here. Each module in the interface processing apparatus can be realized in whole or in part by software, hardware, and combinations thereof. Each module can be embedded in or independent of a processor in a computer device in the form of hardware, and can alternatively be stored in a memory in the computer device in the form of software, so as to facilitate the processor to invoke and execute the operations corresponding to each module.

FIG. 20 is an internal structural diagram of an electronic device according to an embodiment. As shown in FIG. 20, the electronic device includes a processor and a memory that are connected through a system bus. The processor is configured to provide computing and control capabilities and support the operation of the whole electronic device. The memory may include a non-volatile storage medium and an internal memory. The non-volatile storage medium has an operating system and a computer program stored therein. The computer program may be executed by the processor for implementing the interface processing method provided by the embodiments. The internal memory provides a caching environment for the computer programs of the operating system in the non-volatile storage medium. The electronic device can be any terminal device such as a mobile phone, a tablet computer, a PDA (Personal Digital Assistant), a POS (Point of Sales), a vehicle-mounted computer, and a wearable device, etc.

The implementation of each module in the interface processing apparatus provided in embodiments of the present disclosure may be in the form of a computer program. The computer program can be executed on a terminal or a server. A program module composed of the computer program can be stored on the memory of the electronic device. The computer program, when executed by the processor, implements the method described in embodiments of the present disclosure.

The embodiment of the present disclosure further provides a computer-readable storage medium. One or more non-volatile computer-readable storage media containing computer-executable instructions cause the processor to perform the interface processing method when the computer-executable instructions are executed by one or more processors.

A computer program product containing instructions, when executed on a computer, causes the computer to perform the interface processing method.

Any reference to memory, storage, databases, or other media used by the present disclosure may include non-volatile and/or volatile memory. The non-volatile memory may include Read-Only Memory (ROM), Programmable ROM (PROM), Electrically Programmable ROM (EPROM), Electrically Erasable Programmable ROM (EEPROM), or flash memory. The volatile memory may include Random Access Memory (RAM), which acts as external cache memory. By way of illustration and not limitation, RAM is available in a variety of forms such as Static RAM (SRAM), Dynamic RAM (DRAM), Synchronous DRAM (SDRAM), Double Data Rate SDRAM (DDR SDRAM), Enhanced SDRAM (ESDRAM), Synchronous Link (Synchlink) DRAM (SLDRAM), Rambus Direct RAM (RDRAM), Direct Rambus Dynamic RAM (DRDRAM), and Rambus Dynamic RAM (RDRAM).

The above embodiments merely illustrate some implementations of the present disclosure, which are described in details but are not construed as limiting the scope of the present disclosure. It should be understood that those skilled in the art can make various modifications and improvements without departing from the ideas of the present disclosure. These modifications and improvements shall fall within the protection scope of the present disclosure. The protection scope of the present disclosure is defined by the appended claims.

## Claims

1. An interface processing method, comprising:
receiving a first gesture;
displaying, in response to the first gesture acting on a label aggregate in a current interface, at least one label in the label aggregate, each label in the label aggregate being generated based on an application interface; and
displaying, in response to detecting an end of the first gesture, a target application interface corresponding to a target label when the first gesture corresponds to the target label,
wherein the target label is one of the at least one label.

2. The method according to claim 1, wherein said displaying, in response to the first gesture acting on the label aggregate in the current interface, the at least one label in the label aggregate comprises:
determining a starting point position of the first gesture; and
displaying the at least one label in the label aggregate in response to the starting point position being located on the label aggregate in the current interface.

3. The method according to claim 1, wherein said displaying, in response to detecting an end of the first gesture, the target application interface corresponding to the target label when the first gesture corresponds to the target label comprises:
determining a first gesture parameter of the first gesture in response to the end of the first gesture;
determining, based on the first gesture parameter, the target label selected by the first gesture from the at least one label; and
displaying the target application interface corresponding to the target label.

4. The method according to claim 3,
wherein the first gesture parameter comprises a movement direction and a movement di stance,
wherein said determining, based on the first gesture parameter, the target label selected by the first gesture from the at least one label comprises:
determining a label from the at least one label corresponding to the movement direction as a pre-selected label; and
determining the pre-selected label as the target label selected by the first gesture from the at least one label, in response to the movement distance reaching a predetermined label selection distance threshold, and
wherein said displaying the target application interface corresponding to the target label comprises:
displaying a target application floating window corresponding to the target label.

5. The method according to claim 3,
wherein the first gesture parameter comprises an end point position,
wherein said determining, based on the first gesture parameter, the target label selected by the first gesture from the at least one label comprises:
determining a label corresponding to an application floating window trigger area as the target label selected by the first gesture from the at least one label, in response to the end point position being in the predetermined application floating window trigger area, and
wherein said displaying the target application interface corresponding to the target label comprises:
displaying a target application floating window corresponding to the target label.

6. The method according to claim 1, further comprising:
receiving a second gesture;
generating, in response to the second gesture acting on an application interface displayed in the current interface, a label corresponding to the application interface based on the application interface; and
accommodating the label corresponding to the application interface in the label aggregate for display.

7. The method according to claim 6, wherein said generating, in response to the second gesture acting on the application interface displayed in the current interface, the label corresponding to the application interface based on the application interface comprises:
determining an interface distribution parameter of the application interface under the action of the second gesture; and
generating the label corresponding to the application interface based on the application interface, in response to the interface distribution parameter satisfying an interface conversion condition.

8. The method according to claim 6, wherein said generating, in response to the second gesture acting on the application interface displayed in the current interface, the label corresponding to the application interface based on the application interface comprises:
determining a second gesture parameter of the second gesture; and
generating the label corresponding to the application interface based on the application interface, in response to the second gesture parameter satisfying a label generation condition.

9. The method according to claim 1, wherein said displaying the at least one label in the label aggregate in response to the first gesture acting on the label aggregate in the current interface comprises:
displaying the at least one label and a predetermined label vacancy area in the label aggregate in response to the first gesture acting on the label aggregate in the current interface and the label aggregate being unsaturated, and
wherein the method further comprises:
generating a to-be-accommodated label based on an application corresponding to the current interface when the first gesture corresponds to the label vacancy area, in response to detecting the end of the first gesture; and
accommodating the to-be-accommodated label in the label vacancy area of the label aggregate.

10. The method according to claim 1, further comprising:
displaying at least one application floating window corresponding to the at least one label in the label aggregate, in response to the first gesture acting on the label aggregate in the current interface; and
displaying a target application floating window in the current interface when the first gesture corresponds to the target application floating window, in response to detecting the end of the first gesture,
wherein the target application floating window is one of the at least one application floating window.

11. The method according to claim 1, further comprising:
displaying an application notification message of an application corresponding to the label in a notification area associated with the label.

12. The method according to claim 1,
wherein the label aggregate comprises a single label, and
wherein the method further comprises:
displaying in the current interface an application floating window corresponding to the single label in the label aggregate, in response to a click trigger operation acting on the label aggregate in the current interface.

13. The method according to claim 3,
wherein the first gesture parameter comprises a movement distance,
wherein the method further comprises:
determining a standard interface of an application corresponding to the target label in response to the movement distance reaching a predetermined standard interface distance threshold, and
wherein said displaying the target application interface corresponding to the target label comprises:
displaying the standard interface.

14. The method according to claim 3,
wherein the first gesture parameter comprises an end point position,
wherein the method further comprises:
determining a standard interface corresponding to an application of the target label in response to the end point position being in a predetermined standard interface trigger area, and
wherein said displaying the target application interface corresponding to the target label comprises:
displaying the standard interface.

15. The method according to claim 3,
wherein the first gesture parameter comprises a gesture pause time length,
wherein the method further comprises:
determining a standard interface corresponding to an application of the target label in response to the gesture pause time length reaching a predetermined standard interface time length threshold, and
wherein said displaying the target application interface corresponding to the target label comprises:
displaying the standard interface.

16. The method according to claim 1, further comprising:
dragging the label aggregate to an aggregate fixing position corresponding to an aggregate dragging operation, in response to the aggregate dragging operation acting on the label aggregate in the current interface.

17. The method according to any one of claims 1 to 16, further comprising:
obtaining configuration information corresponding to the label aggregate;
configuring the label aggregate based on the configuration information; and
presenting the label aggregate with a display effect corresponding to the configuration information in the current interface.

18. An interface processing apparatus, comprising:
a gesture receiving module configured to receive a first gesture;
an aggregate trigger module configured to display, in response to the first gesture acting on a label aggregate in a current interface, at least one label in the label aggregate, each label in the label aggregate being generated based on an application interface; and
an application interface display module configured to display, in response to detecting an end of the first gesture, a target application interface corresponding to the target label when the first gesture corresponds to a target label,
wherein the target label is one of the at least one label.

19. An electronic device, comprising:
a memory having a computer program stored thereon; and
a processor,
wherein the computer program, when executed by the processor, causes the processor to perform the method according to any one of claims 1 to 17.

20. A computer-readable storage medium, having a computer program stored thereon, wherein the computer program, when executed by a processor, implements the method according to any one of claims 1 to 17.
